# EUROPEAN PATENT APPLICATION

(11) **EP 2 255 621 A2**
(43) Date of publication of application: **01.12.2010**
(21) Application number: 10177665.6
(22) Date of filing: 09.03.2005
(51) Int. Cl.: A01N 25/04, A01N 47/34, A01N 43/653

(54) **A process for the preparation of nanoparticulate pesticidal compositions and composition obtained therefrom**

(30) Priority: 14.03.2004 IL 16085804
(62) Divisional of application: 05718847.6
(71) Applicant: MAKHTESHIM CHEMICAL WORKS LIMITED, 84100 Beer Sheva (IL)
(72) Inventor: Levy-Ruso, Ganit, 84641, Beer-Sheva (IL); Toledano, Ofer, 44246, Kfar Saba (IL)
(74) Representative: Modiano, Micaela Nadia

(57) **Abstract**

The present invention discloses a process for the preparation of an aqueous pesticide dispersion comprising the steps of: a) dissolving a pesticidal active ingredient in a water miscible organic solvent to obtain a pesticide solution; b) mixing the pesticide solution with water in the presence of surface active agents to form aqueous pesticide dispersion. This invention further discloses a method for controlling pests comprising of diluting the aqueous pesticide dispersion of the present invention in water to obtain diluted aqueous pesticide dispersions and applying an effective amount of said diluted dispersion to a site.

## Description

### Field of the Invention

The present invention relates to the field of pesticidal compositions, particularly, to a process for preparing pesticidal compositions of nanoparticulate active ingredients.

### Background of the Invention

The most predominant method for applying pesticides is by treating the site of treatment with a liquid composition containing the pesticide. Since many of the pesticides are water insoluble or poorly soluble in water, often the pesticides are dissolved in organic solvents to create emulsions, or dispersed in a liquid medium by the use of surfactants. The emulsions require the use of organic solvents which often present health and safety hazards to the farmers and the environment. The dispersed formulations often suffer from inferior efficacy, predominantly due to the large particle size of the solid pesticide dispersed in the medium. Hence poor surface area and contact with the treated site. One particular way of overcoming the disadvantage of the dispersed formulation is by creating dispersions wherein the particle size of the pesticide is reduced. This can be achieved by milling the dispersion for example as described in U.S. Patent App lication Publication No. 2001/0051175. The disadvantage in the milling process is that it require special and costly equipment, it is limited to pesticides with a melting point higher than the milling temperature and is limited in the size reducing capability of the equipment.

In view of the aforementioned there is a need for a process for preparing aqueous pesticide dispersions with particularly small particle size and a need for aqueous pesticide dispersions with improved efficacies.

It is therefore an objective of the present invention to provide a proc ess for preparing an aqueous pesticide dispersion of small particle size of nanometric magnitude.

A further objective of the present invention is to provide an aqueous pesticide dispersion of improved efficacy.

It is another objective of the present invention to provide a method for controlling pests.

Other objectives of the invention will become apparent as the description proceeds.

### Summary of the Invention

The present invention provides an innovative process for the preparation of a pesticidal aqueous dispersions comprising the steps of:
a) dissolving a pesticidal active ingredient in a water miscible organic solvent to obtain a pesticide solution;
b) Mixing the pesticide solution with water in the presence of surface active agents to form an aqueous pesticide dispersion.

Optionally, dispersion stabilizing agents may be added to the aqueous pesticide dispersion.

The aqueous pesticide dispersion obtained according to the present process contains a nanoparticuiate pesticide wherein the volume mean size of the particles is not greater than 1000 nanometers (nm), preferably in the range of 100-300 nm.

Further provided by the present invention is an aqueous pesticide dispersion comprising 1% to 60% by weight of at least one pesticide wherein said pesticide has a water solubility not greater than 0.2% w/w, a mean volume particle size up to 600 nanometers (nm), preferably in the range of 100 to 300 nm and a d90 volume particle size up to 1000 nanometers (nm), preferably in the range of 300 to 600 nm, and an organic water miscible solvent obtained according to the foregoing described process. d90 means that 90% of the particles are smaller than the size mentioned

According to yet a further aspect of the present invention there is provide a method for controlling pests comprising of diluting the aqueous pesticide dispersion of the present invention in water to obtain a diluted aqueous pesticide dispersions and applying an effective amount of said diluted dispersion to a site.

### Detailed Description of Preferred Embodiments of the Invention

The following description is illustrative of embodiments of the invention. The following description is not to be construed as limiting, it being understood that the skilled person may cany out many obvious variations to the invention.

Throughout the description, percentages indicated are by weight unless specifically noted otherwise. The term pesticide as used throughout the description means one or more pesticides and includes fungicides, insecticides and herbicides.

The present invention is based on the innovative concept of precipitating a water insoluble pesticide from a solution of an organic water-miscible solvent, in an aqueous medium in a manner where the pesticide particle size is of narrow size distribution and of nanoparticulate magnitude. The aqueous pesticide dispersion obtained according to the present invention is of improved efficacy, hence providing an improved composition in terms of safety and environment. Said improved efficacy is derived from increased surface area of the active ingredients in comparison with other larger particulate dispersions. The present invention obviates the use of hazardous organic aromatic solvents while maintaining efficacy and safety. The nanoparticulate properties of the present aqueous dispersion provide improved efficacy in relation to other aqueous pesticide dispersions. Furthermore the present process does not require the application of milling technologies, which are costly and are limited in terms of size reduction capability and in terms of applicability to various pesticides, e.g., in milling the temperature of the milled mixture may rise, hence the process of milling may be applied only to pesticides which have a melting point hither than the milling temperature.

According to a particular embodiment of the present invention there is provided a process for preparing an aqueous pesticide dispersion comprising the steps of:
a) dissolving 2% to 90% of at least one pesticide in a water miscible organic solvent to obtain a pesticide solution;
b) preparing an aqueous solution comprising 1% to 50%surface active agents to obtain an aqueous solution;
c) Mixing the pesticide solution with the aqueous solution of step b) to form an aqueous pesticide dispersion; and,

Optionally, adding 0.001% to 35% of dispersing and stabilizing agents to the aqueous pesticide dispersion.

Although step a) is listed before step b), carrying out said steps in opposite sequence is within the scope of the present invention.

According to yet a further embodiment of the present process there is provided a process for preparing an aqueous pesticide dispersion comprising the steps of:
a) dissolving 2% to 90% of at least one pesticide in a water soluble organic solvent to obtain a pesticide solution;
b) adding 1% to 50% surface active agents to the pesticide solution obtained in step a);
c) Mixing the pesticide solution obtained in step b) with water to form an aqueous pesticide dispersion; and,

Optionally, adding 0.001% to 25% of dispersing and stabilizing agents.

The composition of the solutions used in the process, e.g. pesticide solution and water or aqueous solution is adjusted so that in the final aqueous dispersion there is 1% to 60% pesticide, 1% to 30% surface active agents, 1% to 70% organic water miscible solvent, 20% to 90% water and Optionally, 0.001% to 15% of dispersing and stabilizing agents.

According to a further aspect of the present invention there is provided an aqueous pesticide dispersion obtained from the process of the present invention wherein said composition comprises 1% to 60% by weight of at least one pesticide wherein said pesticide has a water solubility not greater than 0.2% w/w and a mean volume particle size up to 600 nanometers (nm), preferably in the range of 100 to 300 nm and_a d90 volume particle size up to 1000 nanometers (nm), preferably in the range of 300 to 600 nm, 1% to 30% surface active agents, 1% to 70% organic water miscible solvent 20% to 90% water and Optionally, 0.001% to 15% of dispersing and stabilizing agents. Pesticides suitable for use in the present invention are substantially insoluble in water. In the present context substantially insoluble means a solubility not greater than 0.2% w/w. Non-limiting examples of such pesticides include:
Insecticides selected from among a group comprising of benzoyl ureas such as novaluron and diflubenzuron, carbamates, pyrethroids such as lambda-oyhalothrin and, bifenthrin, organophosphates such as azinfos-methyl, chlorpyrifos, methidathion, neoniconicotinoids, phenylpyrazoles such as imidacloprid and fipronil;
fungicidally active compounds selected from among a group comprising triazoles such as epoxiconazole and tebuconazole, morpholines, azoles such as hexaconazole, strobilurins such as azoxystrobin and analogues, phthalonitriles such as chlorothalonil; and mancozeb.
herbicidal active compounds selected from among a group comprising aryloxyphenoxy derivatives, aryl ureas, aryl carboxylic acids, aryloxy alkanoic acids, dintroanilines and diphenyl ethers, imidazolinones, sulfonylureas, sulfonamides, triazines such as atrazine and simazine; and triazinones such as metamitron.
Organic water-miscible solvents suitable for the purposes of the present invention are solvents with water miscibility of 2% or greater. Pesticide solubility in said solvent is preferably at least 3%. The solvent is selected in accordance to pesticide employed, such that the pesticide dissolves in the solvent. Non-limiting examples of such solvents include N-methyl pyrolidone (NMP), dimethyl sulfoxide (DMSO), sulfolane, acetone, ethanol, dimethylfonnamide (DMF), acetophenone, methanol, butyrolactone, cyclohexanone, dimethyl acetamide (DMA), methyl, ethyl iso-propyl and butyl-lactate esters
Surface active agent means emulsifier, dispersing agent, crystallization inhibitor, stabilizers and any agent wherein the activity thereof is derived from the surfactant activity. Said surfactants may be ionic (anionic, cationic), nonionic. Non-limiting examples of suitable surfactants include (1) emulsifiers and dispersing agents such as tristearyl phenol (TSP) ethoxylates, alcohol ethoxylates, alcohol alkoxylates, ethylene oxide(EO) propylene oxide(PO) blockcopolymers, polymeric surfactants, sulfosuccinates, castor oil ethoxylated, sorbitan esters, alkylphenol ethoxylates (2) crystalization inhibitors such as PEG, PVP, PVA, polyacrilates Rosin gum and rosin esters (3) stabilizing agents such as xantan gum, polysaccharide, Alkyl phenol ethoxylated, Sodium lingo sulfonates..

### Example 1: novaluron nanoparticle aqueous dispersion and preparation method

### Composition:

| | |
|---|---|
| novaluron tech (a.i) as 100% | 10% |
| DMSO (solvent) | 15% |
| TSP-54 (tristearylphenol 54-ethylene oxide)- emulsifier | 13% |
| Witconol (ethylene oxide propylene oxide block copolymer)-dispersing agent | 6.5% |
| | |
| PEG 200 (polyethylene glycol MW 200)- crystallization inhibitor | 7.5% |
| PEG 1000 (polyethylene glycol MW 1000)- crystallization inhibitor | 7.5% |
| Kelzan (polysacharide)-stabilizing agent | 0.2% |
| Soft water | 40.3% |

### Preparation;

Step a) - solution preparation: mix the water with the PEG-200 and PEG-1000 at room temp.
Step b) - Stir the DMSO and add TSP-54 and witconol. Heat to 40°C and mix until all of the TSP-54 and witconol is dissolved, add the novaluron and mix until all of the novaluron is dissolved.
Step c) - Mix slowly the solution from step b) into the solution of Step a). Keep mixing for hour, and add the Kelzan and mix for 1 hr.

### Example 2: Tebuconazole nanoparticle aqueous dispersion and preparation method

### Composition:

| | |
|---|---|
| Tebuconazole tech (a,i) as 100% | 20% |
| Ethyl lactate (solvent) | 15% |
| Castor oil ethoxylated (40 EO) - emulsifier | 15% |
| Alkyl naphthalene sulfonate - dispersing agent | 3.5% |
| Agrimer AL 10 (PVP) - crystallization inhibitor | 2.5% |
| PEG 1000 (polyethylene glycol MW 1000)- crystallization inhibitor | 7.5% |
| Kelzan (polysacharide)-stabilizing agent | 0.15% |
| Soft water | 36.35% |

### Example 3: Effect of novaluron SC formulations, as compared to the standard EC and standard SC formulations, at a concentration of 0.2 mg a.i./liter on 3^{rd} instar of Spodoptera littoralis

Castor bean leaves treated with 0.2 mg a.i./liter of each of the Rimon® (Trademark for novaluron products) formulations were exposed to 3^{rd} instar *S*. *littoralis* (11±1 mg) for 4-day feeding; the larvae were exposed for additional 4 days on untreated leaves. Larval mortality was determined at day 4 and 8. Larval weight gain (LWG) was determined at day 4. Average LWG in the control was 103±15 mg. Data are averages ± SEM of 5 replicates of 10 larvae each. Within columns, means followed by the same letter do not differ significantly at P=0.05.

**Table 1**

| **Formulation** | **No of L₃^{*}** | **Larval mortality, %±SEM 4d** | **at 8d** | **LWG rel. to control** |
|---|---|---|---|---|
| | | | | |
| 0 (Control) | 50 | 2±2a | 4±3a | 100 a |
| | | | | |
| 10SC (70113188) | 50 | 0a | 2+2 a | 126±19 a |
| | | | | |
| **031209** | **50** | **2+2 a** | **38±16bc** | **59±10b** |

| | | | | |
|---|---|---|---|---|
| 10SC (70113188) - commercial sample of Rimon® 10 SC, (MVPS) = 1500 nm, (d90VPS) = 3500 mn SC 03 [209 - Nanoparticulate formulation, MVPS = 330 nm, d90VPS = 470 mn All formulations contain 100 g/l a.i 3^{rd} instar of Spodoptera littoralis | | | | |

Results. According to larval weight gain and larval mortality, Rimon® 031209 is more active than the standard Rimon® SC formulation.

### Example 4: Effect of nauoparticulate novaluron SC formulations at a concentration of 0.3 mg a.i./liter on 3^{rd} instars Spodoptera littoralis

Castor bean leaves treated with 0.3 mg a.i./liter of each of the Rimon SC formulation were exposed to 3^{rd} instar *S. lattoralis* (11±1 mg) for 4-day feeding; the larvae were exposed for additional 4 days on untreated leaves. Larval mortality was determined at day 4 and 8. Larval wight gain (LWG) was determined at day 4. Average LWG in the control was 170±17 mg. Data are averages ± SEM of 5 replicates of 10 larvae each. Within columns, means followed by the same letter do not differ significantly at P=0.05.

**Table 2**

| **Formulation** | **No of L₃** | **Larval mortality, 4d** | **%±SEM at 8d** | **LWG rel. to control** |
|---|---|---|---|---|
| | | | | |
| 0 (Control) | 50 | 0 a | 0 a | 100 a |
| | | | | |
| 10SC (70113188) | 50 | 2±2 a | 48±14 bc | 27±4 b |
| | | | | |
| **SC 040119-1** | **50** | **6±4 a** | **80±7 c** | **23±6 bc** |
| | | | | |
| **SC 040115** | **50** | **4±4 a** | **82±7 c** | **14±2 c** |

| | | | | |
|---|---|---|---|---|
| 10SC (70113188) - commercial sample of Rimon® 10 SC, (MVPS) =1500 mn, (d90VPS) = 3500 nm SC 040119-1- Nanoparticulate formulation, MVPS = 350 nm, d90VPS = 520 nm SC 040115 - Nanoparticulate formulation, MVPS = 350 mn, d90VPS = 520 mn All formulations contain 100 g/l a.i. | | | | |

Results. All the nanoparticulate SC formulations resemble in their potency (larval mortality) and are considerably more potent than the commercial SC formulation. It is of interest to note that all the nanoparticulate SC formulations resulted in lower weight gain as compared to the commercial SC formulations.

The above nanoparticulate SC formulations have been tested for phytotoxicity and have been found to be non-phytotoxic.

While embodiments of the invention have been described by way of illustration, it will be apparent that the invention may be carried out with many modifications, variations and adaptations, without departing from its spirit or exceeding the scope of the claims

## Claims

1. An aqueous pesticide suspension comprising 1% to 60% by weight of at least one pesticide wherein said pesticide has a water solubility not greater than 0.2% w/w and a mean volume particle size up to 600 nanometers (nm), preferably in the range of 100 to 300 nm and a d90 volume particle size up to 1000 nanometers (nm), preferably in the range of 300 to 600 nm; and a water miscible organic solvent.

2. The aqueous pesticide suspension according to claim 1 wherein the pesticides are selected from among insecticides, fungicides and herbicides having a solubility in water not greater than 0.2% w/w.

3. The aqueous pesticide suspension according to claim 1 or 2 wherein the insecticide is selected from among a group comprising benzoyl ureas preferably novaluron and diflubenzuron, carbamates, pyrethroids preferably lambda-cyhalothrin and, bifenthrin, organophosphates preferably azinfos-methyl, chlorpyrifos, methidathion, neonicotnicotinoids, phenylpyrazoles preferably imidacloprid and fipronil; the fungicidally active compounds are selected from among a group comprising triazoles preferably epoxiconazole and tebuconazole, morpholines, azoles preferably hexaconazole, strobilurins preferably azoxystrobin and analogues, phthalonitriles preferably chlorothalonil; and mancozeb;
and the herbicidal active compounds are selected from among a group comprising aryloxyphenoxy derivatives, aryl ureas, aryl carboxylic acids, aryloxy alkanoic acids, dintroanilines and diphenyl ethers, imidazolinones, sulfonylureas, sulfonamides, triazines preferably atrazine and simazine; and triazinones preferably metamitron.

4. The aqueous pesticide suspension according to claim 3 comprising:
(a) 1% to 60% by weight of at least one benzoyl urea pesticide, wherein said pesticide has a water solubility not greater than 0.2% w/w and a mean volume particle size up to 600 nanometers (nm) and a d90 volume particle size up to 1000 nanometers (nm); and
(b) a water miscible organic solvent.

5. The aqueous pesticide suspension of any one of the preceding claims wherein said water miscible organic solvent is selected from the group consisting of N-methyl pyrolidone (NMP), dimethyl sulfoxide (DMSO), sulfolane, acetone, ethanol, dimethylformamide (DMF), acetophenone, methanol, butyrolactone, cyclohexanone, dimethyl acetamide (DMA) methyl, ethyl, iso-propyl and butyl-lactate esters.

6. The aqueous pesticide suspension of any one of the preceding claims comprising 1% to 60% pesticide, 1% to 30% surface active agent, 1% to 70% organic water miscible solvent, 20% to 90% water, and optionally 0.001% to 15% of dispersing and stabilizing agents.

7. The aqueous pesticide suspension according to any one of the preceding claims comprising
(a) 1% to 60% by weight of at least one benzoyl urea pesticide, wherein said pesticide has a water solubility not greater than 0.2% w/w and a mean volume particle size of 100 to 300 nanometers (nm) and a d90 volume particle size of 300 to 600 nanometers (nm);
(b) 1-70% of a water miscible organic solvent; and
(c) 20-90 % water.

8. The aqueous pesticide suspension of any one of the preceding claims wherein said benzoyl urea is selected from novaluron and diflubenzuron.

9. The aqueous pesticide suspension of any one of the preceding claims wherein said particles are obtained by precipitation.

10. The aqueous pesticide suspension of claim 9 wherein said precipitation is from a solution of an organic water miscible solvent in an aqueous medium.

11. A process for the preparation of an aqueous pesticide suspension according to claim 1, comprising the steps of:
a) dissolving a pesticidal active ingredient having a water solubility not greater than 0.2 w/w, in a water miscible organic solvent to obtain a pesticide solution;
b) mixing the pesticide solution with water in the presence of surface active agents to form an aqueous pesticide suspension.

12. A process according to claim 11 wherein the pesticides are selected from among insecticides, fungicides and herbicides having a solubility in water not greater than 0.2% w/w.

13. A process according to claim 12, wherein the insecticide is selected from among a group comprising benzoyl ureas preferably novaluron and diflubenzuron, carbamates, pyrethroids preferably lambda-cyhalothrin and, bifenthrin, organophosphates preferably azinfos-methyl, chlorpyrifos, methidathion, neonicotnicotinoids, phenylpyrazoles preferably imidacloprid and fipronil; the fungicidally active compounds are selected from among a group comprising triazoles preferably epoxiconazole and tebuconazole, morpholines, azoles preferably hexaconazole, strobilurins preferably azoxystrobin and analogues, phthalonitriles preferably chlorothalonil; and mancozeb; and the herbicidal active compounds are selected from among a group comprising aryloxyphenoxy derivatives, aryl ureas, aryl carboxylic acids, aryloxy alkanoic acids, dintroanilines and diphenyl ethers, imidazolinones, sulfonylureas, sulfonalnides, triazines preferably atrazine and simazine; and triazinones preferably metamitron.

14. A process according to claim 13 comprising the steps of:
a) dissolving a benzoyl urea pesticidal active ingredient preferably novaluron and diflubenzuron having a water solubility not greater than 0.2% w/w in a water miscible organic solvent to obtain a pesticide solution;
b) mixing the pesticide solution with water in the presence of surface active agents to form an aqueous pesticide suspension.

15. A process according to any one of claims 11 to 14, wherein a suspension-stabilizing agent is added to the aqueous pesticide suspension.

16. A process according to any one of claim 11 to 14, wherein the surface active agents are added to the pesticide solution before the mixing with water.

17. A process according to claim any one of claims 11 to 14, wherein the surface active agents are added to water to obtain an aqueous solution, followed by the mixing of the pesticide solution with said aqueous solution.

18. A process according to any one of claims 11 to 17, wherein the organic water-miscible solvent is selected from among a group comprising N-methyl pyrrolidone (NMP), dimethyl sulfoxide (DMSO), sulfolane, acetone, ethanol, dimethylformamide (DMF), acetophenone, methanol, butyrolactone, cyclohexanone, dimethyl acetamide (DMA), methyl, ethyl, iso-propyl and butyl-lactate esters.

19. A method for controlling pests comprising diluting the aqueous pesticide suspension according to any one of claims 1-10 in water to obtain a diluted aqueous pesticide suspension and applying an effective amount of said diluted suspension to a site.
